# EUROPEAN PATENT APPLICATION

(11) **EP 3 090 800 A1**
(43) Date of publication of application: **09.11.2016**
(21) Application number: 14877054.8
(22) Date of filing: 18.12.2014
(51) Int. Cl.: B01J 19/18

(54) **BATCH REACTOR WITH BAFFLE**

(30) Priority: 02.01.2014 KR 20140000241
(71) Applicant: Hanwha Chemical Corporation, Seoul 04541 (KR)
(72) Inventor: JUNG, Ki Taeg, Daejeon 305-313 (KR); HAN, Kee Do, Daejeon 305-759 (KR); KIM, Young Jo, Daejeon 305-790 (KR); KIM, Hyo Suk, Daejeon 305-755 (KR); YOON, Kyong Jun, Daejeon 305-761 (KR); LEE, Hye Won, Daejeon 305-720 (KR)
(74) Representative: Alt, Michael
(86) International application number: PCT/KR2014/012530
(87) International publication number: WO 2015/102273

(57) **Abstract**

A batch reactor of which an installation structure of baffles is improved is provided. A batch reactor includes: a reactor main body containing a reactant; agitation blades provided in the reactor main body to agitate the reactant; a motor coupled to a rotation shaft of the agitation blades to rotate the agitation blades; and a plurality of baffles provided between an inner wall of the reactor main body and the agitation blades, and disposed at a distance from each other along a circumferential direction of the reactor main body. Each of the plurality of baffles includes a plurality of pipes disposed to be adjacent to each other along a radial direction and a circumferential direction of the reactor main body.

## Description

### [Technical Field]

The present invention relates to a batch reactor. More particularly, the present invention relates to an installation structure of a baffle.

### [Background Art]

A typical batch reactor includes a reactor main body containing a reactant, an agitation blade that is provide in the reactor main body to agitate the reactant, and a driving motor rotating the agitation blade. In addition, the batch reactor may include a reactor jacket, a baffle, and a reflux condenser as constituent elements for controlling a temperature of the reactant.

The baffle is provided as a pipe through which a fluid flows for heat exchange, and is disposed close to an interior wall of the reactor main body from an outer side of the agitation blade. The baffle changes the reactant flowing in a circumferential direction due to rotation of the agitation blades in a vertical direction to sufficiently mix the reactant, and provides temperature control (i.e., heat control) performance to maintain a temperature of the reactant to be constant through heat exchange with the reactant.

However, there is a limit in expansion of the size of agitation blade and the surface area (heat transfer area) of the baffle depending on an installation format of the baffle. For example, when the baffles occupy a long area along the radial direction of the reactor main body, the agitation blades cannot be increased in size, and accordingly agitation performance and reaction performance of the reactant cannot be limitlessly increased. Further, as the reactor is increased in size, the heat transfer area of the baffle is reduced compared to the volume of the reactor in the same baffle structure, and accordingly, temperature control performance of the baffle is deteriorated.

### [DISCLOSURE]

### [Technical Problem]

The present invention has been made in an effort to provide a batch reactor that can enhance mixing performance of a reactant or improve heat control performance of the reactant by expanding one of the size of the agitation blade or the heat transfer area of the baffle.

### [Technical Solution]

A batch reactor according to an exemplary embodiment of the present invention includes: a reactor main body containing a reactant; agitation blades provided in the reactor main body to agitate the reactant; a motor coupled to a rotation shaft of the agitation blades to rotate the agitation blades; and a plurality of baffles provided between an inner wall of the reactor main body and the agitation blades, and disposed at a distance from each other along a circumferential direction of the reactor main body. Each of the plurality of baffles includes a plurality of pipes disposed to be adjacent to each other along a radial direction and a circumferential direction of the reactor main body.

The plurality of pipes are parallel with the rotation shaft and integrally connected with each other in a meandering pattern by U-shaped connection parts. One of the plurality of pipes may penetrate a bottom portion of the reactor main body and another pipe may penetrate a side wall of the reactor main body.

The plurality of pipes may include at least three pipes arranged in a triangular pattern. In addition, at least two among the three pipes may be arranged along a radial direction of the reactor main body.

Alternatively, the plurality of pipes may be arranged in a zigzag pattern. The plurality of pipes may include at least five pipes arranged in a zigzag pattern while forming two columns. At least one column among the two columns may be parallel with the radial direction of the reactor main body.

### [Advantageous Effects]

According to the exemplary embodiments of the present invention, turbulence and mixing performance of the reactant can be enhanced by expanding the size of agitation blades. In addition, heat control performance of the reactant can be improved by expanding the heat transfer area of the baffle while maintaining agitation performance to be the same level as a conventional case.

### [Description of the Drawings]

FIG. 1 is a schematic diagram of a batch reactor according to a first exemplary embodiment of the present invention.
FIG. 2 is a schematic cross-sectional view of FIG. 1, taken along the line I-I.
FIG. 3 is a schematic cross-sectional view of a batch reactor according to a comparative example.
FIG. 4 is a schematic cross-sectional view of a batch reactor according to a second exemplary embodiment of the present invention.

### - Description of Symbols -

| | |
|---|---|
| 100, 200: batch reactor | 20: reactor main body |
| 31: agitation blade | 32: rotation shaft |
| 33: motor | 40, 401, 50: baffle |

### [Mode for Invention]

The present invention will be described more fully hereinafter with reference to the accompanying drawings, in which exemplary embodiments of the invention are shown. As those skilled in the art would realize, the described embodiments may be modified in various different ways, all without departing from the scope of the present invention.

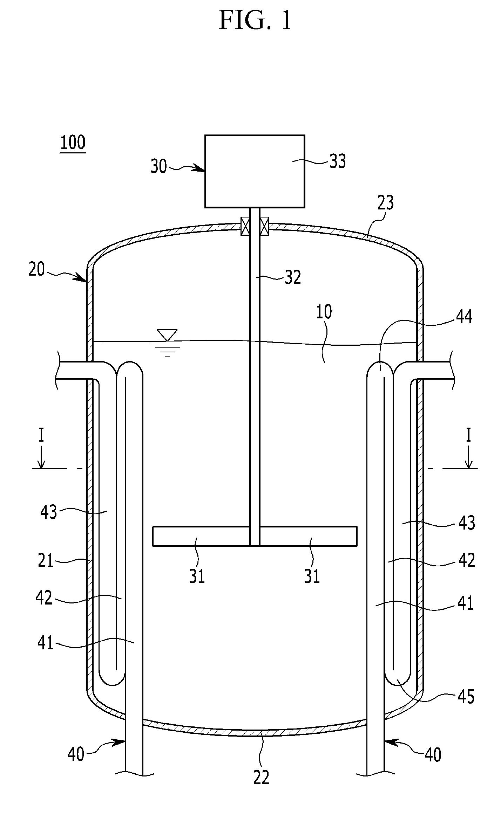

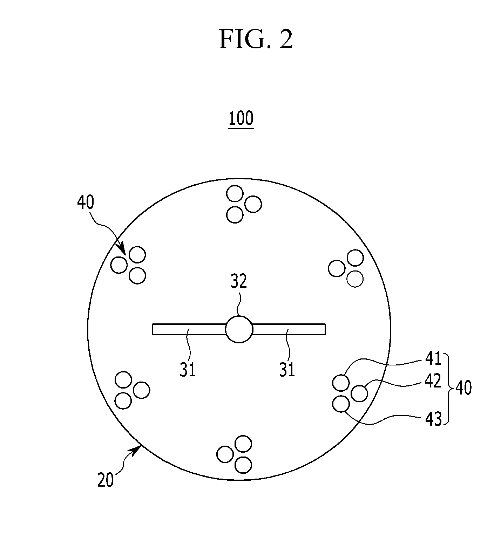

FIG. 1 is a schematic diagram of a batch reactor according to a first exemplary embodiment of the present invention, and FIG. 2 is a schematic cross-sectional view of FIG. 1, taken along the line I-I.

Referring to FIG. 1 and FIG. 2, a batch reactor 100 according to the first exemplary embodiment of the present invention includes a reactor main body 20 containing a reactant 10, agitation blades 31 provided in the reactor main body 20 to rotate the reactant 10, a motor 33 coupled to a rotation shaft 32 of the agitation blades 31 to rotate the agitation blades 31, and a plurality of baffles 40 provided between an interior wall of the reactor main body 20 and the agitation blades 31.

The batch reactor 100 may be, for example, a polymerization reactor for polymerization. The reactor main body 20 may be formed of a cylindrical side wall 21, a bottom portion 22, and a cover portion 23. Although it is not illustrated, the reactor main body 20 may have a double wall structure such that a fluid may circulate through the wall for heat exchange. That is, a heat exchange jacket may be provided in the reactor main body 20.

The agitation blades 31, the rotation shaft 32, and the motor 33 form an agitation device 30. The rotation shaft 32 is coupled with the motor 33 in a center of the reactor main body 20. The agitation blades 31 are coupled to the rotation shaft 32 in the reactor main body 20, and a length direction of the agitation blade 31 is parallel with a radial direction of the reactor main body 20.

One set of agitation blades 31 may be provided at a lower end of the rotation shaft 32, or a plurality of sets of agitation blades 31 may be provided at a distance from each other along the length direction of the rotation shaft 32. A single set of agitation blades 31 is formed of at least two agitation blades 31. In FIG. 1 and FIG. 2, two agitation blades 31 are exemplarily provided at the lower end of the rotation shaft 32, but the location and the number of agitation blades 31 are not limited thereto.

Agitation performance of the agitation blade 31 affects reaction performance of the batch reactor 100. The agitation blade 31 includes a paddle type, a propeller type, and a turbine type, and in FIG. 1 and FIG. 2, a paddle type agitation blade 31 is exemplarily illustrated but this is not restrictive.

The baffles 40 change a circumferential directional flow of the reactant 10 according to rotation of the agitation blades 31 to a vertical directional flow to properly mix the reactant 10. In addition, since the baffle 40 is formed of a pipe through which a fluid flows for heat exchange, the baffle 40 also provides a temperature control function to maintain a temperature of the reactant 10 through the heat-exchange with the reactant 10.

The fluid for heat exchange may have a temperature between about 4 °C to about 35 °C, and in case of a high temperature, the fluid may have a temperature between about 50 °C to about 200 °C.

The baffles 40 are disposed at a distance from each other along a circumferential direction of the reactor main body 20. That is, the plurality of baffles 40 are provided along the circumferential direction of the reactor main body 20 while having a constant distance from the agitation blade 31, and they are preferably equally distanced from each other along the circumferential direction.

A plurality of pipes 41, 42, and 43 that are parallel with the rotation shaft 32 are integrally connected in a meandering pattern such that each baffle 40 is formed. Specifically, the baffle 40 may include a first pipe 41, a second pipe 42 coupled to the first pipe 41 by a U-shaped first connection portion 44, and a third pipe 43 coupled to the second pipe 42 by a U-shaped second connection portion 45. The first pipe 41 may penetrate the bottom portion 22 of the reactor main body 20, and the third pipe 43 may penetrate the side wall 21 of the reactor main body 20. The shape of the first connection portion 44 and the shape of the second connection portion 45 are not limited to the U-shape.

In the first exemplary embodiment of the present invention, each baffle 40 includes the first to third pipes 41, 42, and 43, and the first to third pipes 41, 42, and 43 are disposed adjacent to each other along a radial direction and a circumferential direction of the reactor main body 20. That is, at least a part of one pipe faces another pipe along the radial direction of the reactor main body 20, and at least a part of another pipe faces the other pipe along the circumferential direction of the reactor main body 20.

For example, the first to third pipes 41, 42, and 43 may be arranged at a distance from each other in a triangular pattern. With such an alignment of the pipes, the area occupied by the baffles 40 along the radial direction of the reactor main body 20 can be reduced to expand the agitation blades 31. The expansion of the agitation blade 31 may lead to improvement of agitation and reaction of the reactant 10.

In this case, two pipes among the first to third pipes 41, 42, and 43 may be arranged along the radial direction of the reactor main body 20. Thus, the reactant 10 rotating by the agitation blades 31 and the baffles 40 can contact well, thereby enhancing heat control performance of the baffles 40.

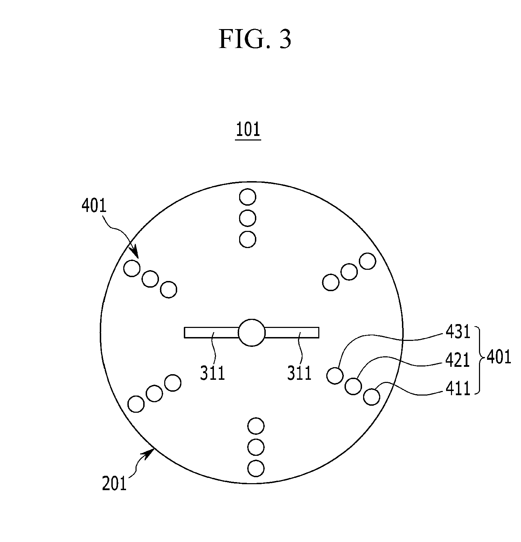

FIG. 3 illustrates a schematic cross-sectional view of a batch reactor according to a comparative example.

Referring to FIG. 3, each of a plurality of baffles 401 in a batch reactor 101 according to the Comparative Example is formed of first to third pipes 411, 421, and 431 arranged in one row along a radial direction of a reactor main body 201.

Referring to FIG. 2 and FIG. 3, the first to third pipes 41, 42, and 43 of the first exemplary embodiment of the present invention and the baffle 401 of the comparative example have the same heat transfer area, and accordingly, they provide substantially the same heat control performance.

However, in the comparative example, the baffle 401 occupies a relatively large area along a radial direction of the reactor main body 201, and accordingly, the size of agitation blades 311 needs to be reduced to avoid collision with the baffle 401. That is, the baffle 401 limits expansion of the size of the agitation blades 311.

That is, in the first exemplary embodiment of the present invention, the first to third pipes 41, 42, and 43 are densely arranged in a triangular pattern, and thus the baffle 40 does not occupy a large area along the radial direction of the reactor main body 20. Accordingly, since the size of the agitation blade 31 can be expanded in the batch reactor 100 according to the first exemplary embodiment of the present invention, turbulence of the reactant 10 is increased and mixing performance can be enhanced, thereby improving manufacturing quality of the reactant 10.

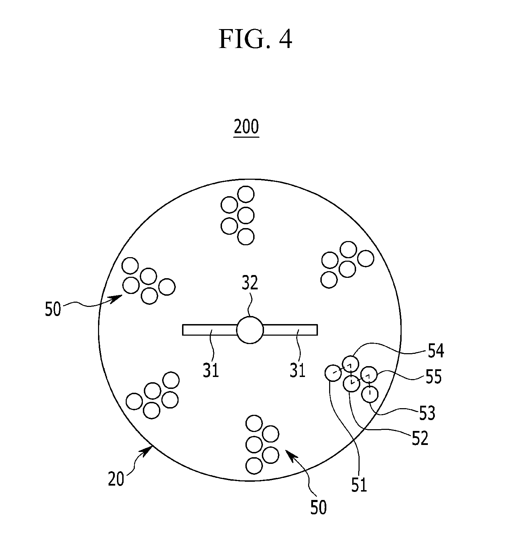

FIG. 4 is a schematic cross-sectional view of a batch reactor according to a second exemplary embodiment of the present invention.

Referring to FIG. 4, a batch reactor 200 according to the second exemplary embodiment of the present invention is formed of a structure that is similar to the batch reactor 100 of the first exemplary embodiment, except that a baffle 50 is formed of five pipes 51, 52, 53, 54, and 55. The same members as in the first exemplary embodiment use the same reference numerals, and hereinafter, different configurations from the first exemplary embodiment will be mainly described.

A plurality of baffles 50 are disposed at an equal distance from each other along a circumferential direction of the reactor main body 20 while being distanced from agitation blades 31, and each baffle 50 is formed of first to fifth pipes 51, 52, 53, 54, and 55 that are parallel with a rotation shaft 32 and integrally connected in a meandering pattern.

The first to fifth pipes 51, 52, 53, 54, and 55 are integrally coupled with each other by U-shaped connection portions (not shown) such that a single baffle 50 is formed. One of the first to fifth pipes 51, 52, 53, 54, and 55 may penetrate a bottom portion 22 of the reactor main body 21, and another pipe may penetrate a side wall 21 of the reactor main body 20.

In the second exemplary embodiment of the present invention, each baffle 50 includes the first to fifth pipes 51, 52, 53, 54, and 55, and the first to fifth pies 51, 52, 53, 54, and 55 are disposed adjacent to each other along a radial direction and a circumferential direction of the reactor main body 20. That is, at least a part of one pipe faces another pipe along the radial direction of the reactor main body 20, and at least a part of another pipe faces another pipe along the circumferential direction of the reactor main body 20.

For example, the first to fifth pipes 51, 52, 53, 54, and 55 may be arranged in a zigzag pattern while forming two columns. In FIG. 4, a virtual zigzag connection line connecting the centers of the first to fifth pipes 51, 52, 53, 54, and 55 in the baffle 50 in the rightmost side is denoted as a dotted line.

In this case, at least one column among the two columns may be arranged in one row along the radial direction of the reactor main body 20. In this case, a contact area between a reactant 10 flowing along the circumferential direction of the reactor main body 20 by the agitation blades 31 and the baffles 50 is increased, thereby improving heat control performance of the baffle 50.

In FIG. 4, the first to third pipes 51, 52, and 53 exemplarily form one column along the radial direction of the reactor main body 20, and the fourth pipe 54 and the fifth pipe 55 exemplarily form the other column neighboring thereto.

In the second exemplary embodiment of the present invention, the number of pipes forming the baffle 50 is increased while maintaining a constant width of the agitation blade 31 compared to the comparative example of FIG. 3 such that a heat transfer area of the baffle 50 can be increased by 50 % or more. Accordingly, the batch reactor 200 according to the second exemplary embodiment of the present invention can effectively improve heat control performance of the reactant 10 while assuring agitation performance which is the same level as of the comparative example.

While this invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

### [Industrial Applicability]

According to the exemplary embodiments of the present invention, turbulence of the reactant can be increased and mixing performance can be enhanced by expanding the size of the agitation blade, and the heat transfer area of the baffle can be expanded while maintaining agitation performance at a level that is the same as that of a conventional case, thereby improving heat control performance of the reactant.

## Claims

1. A batch reactor comprising:
a reactor main body containing a reactant;
agitation blades provided in the reactor main body to agitate the reactant;
a motor coupled to a rotation shaft of the agitation blades to rotate the agitation blades; and
a plurality of baffles provided between an inner wall of the reactor main body and the agitation blades, and disposed at a distance from each other along a circumferential direction of the reactor main body,
wherein each of the plurality of baffles comprises a plurality of pipes disposed to be adjacent to each other along a radial direction and a circumferential direction of the reactor main body.

2. The batch reactor of claim 1, wherein the plurality of pipes are parallel with the rotation shaft and integrally connected with each other in a meandering pattern by U-shaped connection parts.

3. The batch reactor of claim 2, wherein one of the plurality of pipes penetrates a bottom portion of the reactor main body and another pipe penetrates a side wall of the reactor main body.

4. The batch reactor of any one of claim 1 to claim 3, wherein the plurality of pipes comprise at least three pipes arranged in a triangular pattern.

5. The batch reactor of claim 4, wherein at least two among the three pipes are arranged along a radial direction of the reactor main body.

6. The batch reactor of any one of claim 1 to claim 3, wherein the plurality of pipes are arranged in a zigzag pattern.

7. The batch reactor of claim 6, wherein the plurality of pipes comprise at least five pipes arranged in a zigzag pattern while forming two columns.

8. The batch reactor of claim 7, wherein at least one column among the two columns is parallel with the radial direction of the reactor main body.
